# EUROPEAN PATENT APPLICATION

(11) **EP 4 725 381 A1**
(43) Date of publication of application: **15.04.2026**
(21) Application number: 25192471.8
(22) Date of filing: 29.07.2025
(51) Int. Cl.: A47L 9/28, A47L 11/40

(54) **LIFTING-AND-LOWERING ASSEMBLY AND CLEANING DEVICE**

(30) Priority: 09.10.2024 CN 202422440438 U
(71) Applicant: Beijing Xiaomi Mobile Software Co., Ltd., Beijing 100085 (CN)
(72) Inventor: GE, Ning, Beijing, 100085 (CN); QI, Zhennan, Beijing, 100085 (CN)
(74) Representative: Gunzelmann, Rainer

(57) **Abstract**

A lifting-and-lowering assembly includes a mounting seat (135), a distance sensing module (12), and a drive control module (13), and the distance sensing module is liftably and lowerably arranged at the mounting base. The distance sensing module includes a sensing body (121) and a movable body (122) that is movably connected to the sensing body, and the movable body has a first triggering structure (1221), and the sensing body has a protective switch (1222) located in a movement path of the first triggering structure. The drive control module is assembled on the mounting seat and includes a control main board, a drive motor (131), and an adapting member (133) that is in transmission connection to the drive motor.

## Description

### FIELD

The present invention relates to the field of smart home technologies, and more particularly to a lifting-and-lowering assembly and a cleaning device.

### BACKGROUND

In the related art, a cleaning device requires a distance-sensing module to obtain scene map data to complete an intelligent cleaning for the current scene.

### SUMMARY

The present invention provides a lifting-and-lowering assembly and a cleaning device to address problems in the related art.

According to a first aspect of an embodiment of the present invention, there is provided a lifting-and-lowering assembly configured to be applied to a cleaning device, including: a mounting seat; a distance-sensing module liftably and lowerably arranged at the mounting seat, wherein the distance-sensing module includes a sensing body and a movable body movably connected to the sensing body, the movable body has a first trigger structure, and the sensing body has a protective switch located in a movement path of the first trigger structure; and a drive control module assembled with the mounting seat, including a control main board, a drive motor and an adapting member in transmission connection with the drive motor, wherein the sensing body is arranged on the adapting member, and the drive motor and the protective switch are each electrically connected to the control main board to drive the distance-sensing module to lift and lower.

Optionally, the distance-sensing module includes an elastic reset piece and a connecting piece connected to the sensing body; the movable body includes a guiding piece having a first guiding hole, the connecting piece passes through the first guiding hole and is in clearance fit with the first guiding hole; and the elastic reset piece abuts with both the movable body and the sensing body.

Optionally, the movable body has at least two guiding pieces, and the distance-sensing module includes connecting pieces in one-to-one correspondence and fit with the guiding pieces; and/or the distance-sensing module includes at least two elastic reset pieces.

Optionally, the movable body is arranged at a top of the sensing body in a lifting-and-lowering direction.

Optionally, the movable body includes a housing, a cover, and a voice control module, the cover is assembled to the housing to enclose an accommodation cavity, and the voice control module is assembled in the accommodation cavity.

Optionally, the protective switch is arranged at a top of the sensing body in a lifting-and-lowering direction.

Optionally, the adapting member has a threaded transmission hole, the drive control module includes a transmission screw, and the transmission screw is connected with an output shaft of the drive motor and is in transmission connection with the threaded transmission hole.

Optionally, the drive control module further includes a guiding structure; the guiding structure includes a fixed pressing plate and a guiding column arranged to the fixed pressing plate; the drive motor is assembled and fitted with the fixed pressing plate, and the fixed pressing plate is fixedly connected to the sensing body; the adapting member has a second guiding hole, and the guiding column is movably inserted into the second guiding hole.

Optionally, the threaded transmission hole is arranged in a central area of the adapting member, and the adapting member includes a pair of second guiding holes symmetrically arranged at two sides of the threaded transmission hole.

Optionally, the lifting-and-lowering assembly further includes a lifting-and-lowering detection module, wherein the lifting-and-lowering detection module includes a second trigger structure and a circuit board electrically connected to the control main board; and the second trigger structure is assembled with the adapting member, and the circuit board has an upper limit detection switch and a lower limit detection switch arranged in a height direction of the device body; in a case that the distance-sensing module reaches a lower limit position, the second trigger structure cooperates with the lower limit detection switch; and in a case that the distance-sensing module reaches an upper limit position, the second trigger structure cooperates with the upper limit detection switch.

Optionally, the upper limit detection switch and the lower limit detection switch each include an optocoupler switch, and the second trigger structure includes a light-blocking piece.

Optionally, the sensing body includes a base, a mounting shield, and a laser radar body, the mounting shield is assembled with the base to enclose a mounting cavity, and the laser radar body is assembled in the mounting cavity.

Optionally, the first trigger structure includes a protruding structure arranged on a side surface of the movable body facing the sensing body.

According to a second aspect of an embodiment of the present invention, there is provided a cleaning device, including a device body and the lifting-and-lowering assembly according to the first aspect of the present invention, wherein the device body has a receiving cavity, and the lifting-and-lowering assembly is assembled in the receiving cavity; and the distance-sensing module has a first operating state where the distance-sensing module is received in the receiving cavity and a second operating state where the distance-sensing module protrudes above a top of the device body in a lifting-and-lowering direction. The technical solution provided by the present invention is able to achieve at least the following beneficial effects.

The distance sensing module of the lifting-and-lowering assembly provided by the present invention includes a sensing body and a movable body. The first trigger structure on the movable body is able to produce a displacement that triggers the protective switch on the sensing body when subjected to an external force, causing the drive motor of the drive control module to drive the adapting member, the sensing body arranged on the adapting member, and the movable body movably connected to the sensing body to perform lifting and lowering movements. Arranging the sensing body on the adapting member and the protective switch on the sensing body helps to enhance the electrical connection convenience of the lifting-and-lowering assembly.

In a case that the lifting-and-lowering assembly is assembled in a cleaning device, the distance sensing module of the lifting-and-lowering assembly may be switched between a first operating state where the distance sensing module is housed within the accommodation space of the device body and a second operating state where the distance sensing module protrudes from the device body, under the drive control of the drive control module, so that the distance sensing module is controlled to be lowered in a case that the distance sensing module is subjected to an external collision or in a case that the drive control module receives a lowering command so as to enter into a low-clearance space. Conversely, in a case that the drive control module receives a raising command, the distance sensing module may protrude from the device body to reach the height required for a distance measurement function. The above structural arrangement help to reduce the thickness of the cleaning device and enrich the working scenarios of the cleaning device.

It should be understood that the general description above and the detailed description that follows are illustrative and explanatory in nature and should not be construed as limiting the specification.

### BRIEF DESCRIPTION OF THE DRAWINGS

The accompanying drawings are incorporated into and form a part of the description, illustrating embodiments in accordance with the description, and are used together with the description to explain the principle of the description.
FIG. 1 is a structural diagram of a distance sensing module of a cleaning device in a first operating state according to an illustrative embodiment of the present invention;
FIG. 2 is a structural diagram of a distance sensing module of a cleaning device in a second operating state according to an illustrative embodiment of the present invention;
FIG. 3 is an exploded structural diagram of a lifting-and-lowering assembly according to an illustrative embodiment of the present invention;
FIG. 4 is another exploded structural diagram of a lifting-and-lowering assembly according to an illustrative embodiment of the present invention;
FIG. 5 is yet another exploded structural diagram of a lifting-and-lowering assembly according to an illustrative embodiment of the present invention;
FIG. 6 is a cross-sectional structural diagram of a lifting-and-lowering assembly according to an illustrative embodiment of the present invention;
FIG. 7 is a further exploded structural diagram of a lifting-and-lowering assembly according to an illustrative embodiment of the present invention;
FIG. 8 is another cross-sectional structural diagram of a lifting-and-lowering assembly according to an illustrative embodiment of the present invention.

### DETAILED DESCRIPTION

Reference will now be made in detail to illustrative embodiments, examples of which are illustrated in the accompanying drawings. In a case that the following description refers to the drawings, unless otherwise indicated, the same numbers in different drawings indicate the same or similar elements. Embodiments described in the following illustrative embodiments do not represent all embodiments consistent with the present invention. Rather, they are merely examples of devices and methods consistent with some aspects of the present specification and as detailed in the appended claims.

The terminology used in the present invention is merely for the purpose of describing specific embodiments and is not intended to limit the present invention. Unless otherwise defined, the technical or scientific terms used in the specification should be construed as having the ordinary meaning understood by ordinary skills in the field to which the present invention pertains. The terms "first," "second," and similar terms used in the specification and claims do not denote any order, quantity, or importance, but are merely used to distinguish different components. Similarly, the terms "a," "an," or similar terms do not indicate a limitation on quantity, but rather indicate the presence of at least one. The term "plural" or "several" refers to two or more. Unless otherwise specified, terms such as "front," "rear," "lower," and/or "upper" are used merely for convenience of description and are not limited to a specific position or spatial orientation. The terms "comprising" or "including" and similar terms indicate that the elements or objects preceding "comprising" or "including" have the elements or objects listed after "comprising" or "including" and their equivalents, and do not exclude other elements or objects. The terms "connect" or "couple" and similar terms are not limited to physical or mechanical connections, but may also include electrical connections, whether direct or indirect.

The terminology used in the specification is merely for the purpose of describing specific embodiments and is not intended to limit the present invention. The singular forms "a/an" "said," and "the" used in the specification and the appended claims are also intended to include the plural forms, unless the context clearly indicates otherwise. It should also be understood that the term "and/or" used in the specification refers to and includes any and all possible combinations of one or more of the associated listed items.

In the related art, a cleaning device requires a distance sensing module to obtain scene map data to complete intelligent cleaning for the current cleaning scenario. However, the distance sensing module is typically arranged on the top of cleaning device to obtain an accurate and complete scene map utilizing the height of the cleaning device, which causes the distance sensing module to affect the overall height of the cleaning device. In a cleaning environment with low-clearance areas, the distance sensing module increases the overall height of the device, preventing it from smoothly entering these low-clearance areas.

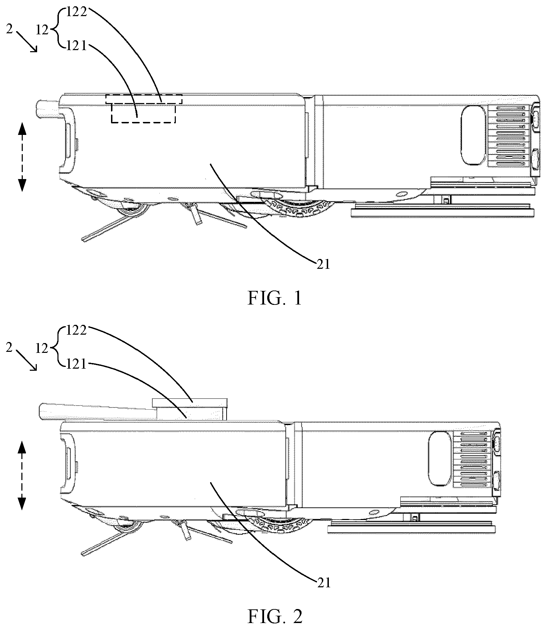

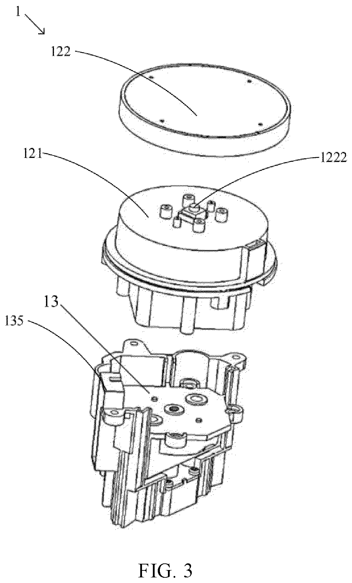

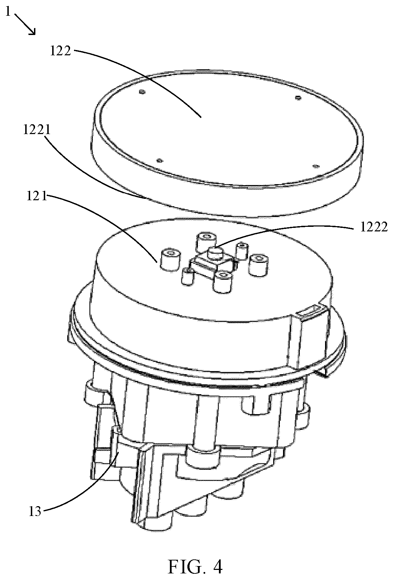

The present invention provides a lifting-and-lowering assembly. FIG. 1 is a structural diagram of a distance sensing module of a cleaning device in a first operating state according to an illustrative embodiment of the present invention. Fig. 2 is a structural diagram of a distance sensing module of a cleaning device in a second operating state according to an illustrative embodiment of the present invention. FIG. 3 is an exploded structural diagram of a lifting-and-lowering assembly according to an illustrative embodiment of the present invention. FIG. 4 is another exploded structural diagram of a lifting-and-lowering assembly according to an illustrative embodiment of the present invention. As shown in FIGS. 1 to 4, the lifting-and-lowering assembly 1 includes a mounting seat 135, a distance sensing module 12, and a drive control module 13. The distance sensing module is liftably and lowerably arranged on the mounting seat 135. The distance sensing module 12 includes a sensing body 121 and a movable body 122 that is movably connected to the sensing body 121. The movable body 122 has a first trigger structure 1221, and the sensing body 121 has a protective switch 1222 located in a movement path of the first trigger structure 1221. The drive control module 13 is assembled at the mounting seat 135 and includes a control main board, a drive motor 131, and an adapting member 133 in transmission connection to the drive motor 131. The sensing body 121 is arranged on the adapting member 133, and both the drive motor 131 and the protective switch 1222 are each electrically connected to the control main board to drive the distance sensing module 12 to lift and lower.

The distance sensing module 12 of the above lifting-and-lowering assembly 1 includes the sensing body 121 and the movable body 122. The first trigger structure 1221 on the movable body 122 may produce a displacement that triggers the protective switch 1222 on the sensing body 121 when subjected to an external force, causing the drive motor 131 of the drive control module 13 to drive the adapting member 133, the sensing body 121 arranged on the adapting member 133, and the movable body 122 movably connected to the sensing body 121 to perform lifting and/or lowering movements. Arranging the sensing body 121 on the adapting member 133 and the protective switch 1222 on the sensing body 121 helps enhance the electrical connection convenience of the lifting-and-lowering assembly 1.

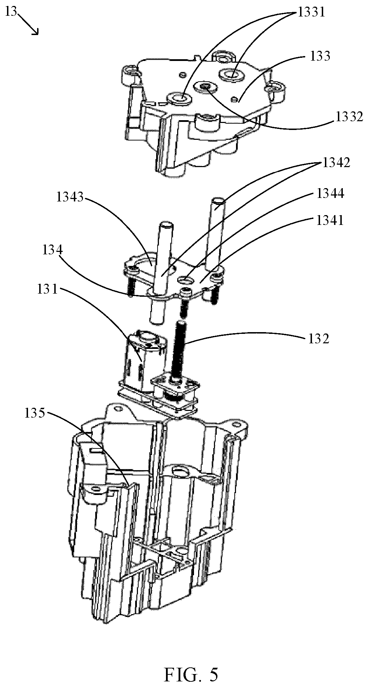

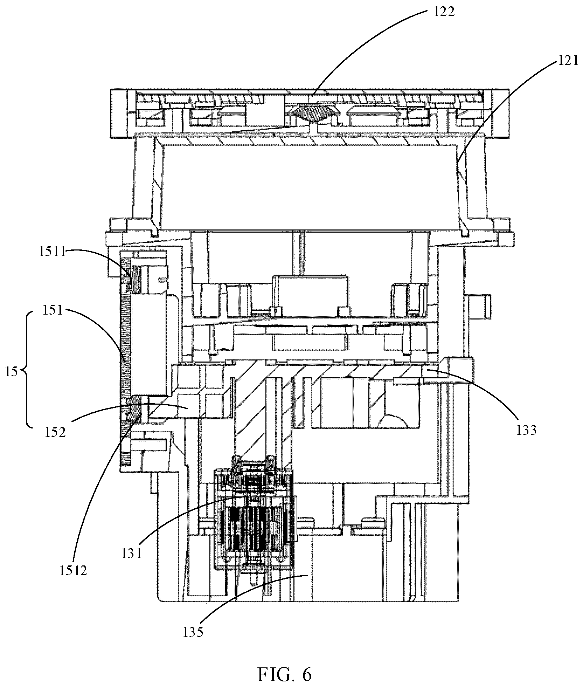

In some embodiments, as shown in FIGS. 5 and 6, the distance sensing module 12 includes an elastic reset piece 125 and a connecting piece 124 that is connected to the sensing body 121. The movable body 122 has a guiding piece 123, the guiding piece 123 has a first guiding hole. The connecting piece 124 passes through the first guiding hole and is in clearance fit with the first guiding hole. The elastic reset piece 125 abuts with both the movable body 122 and the sensing body 121. The guiding piece 123 provides guidance and positioning for the movement of the movable body 122 under force, preventing an excessive displacement of the movable body 122 relative to the sensing body 121. The elastic reset piece 125 may deform in a case that the movable body 122 is subjected to force, so as to adapt to the displacement of the movable body 122, and reset the movable body 122 by the elasticity of elastic reset piece 125 in a case that the external force acting on the movable body 122 disappears.

In the above embodiments, the guiding piece 123 may be a guiding cap, and the movable body 122 has a mounting position for the guiding cap, and the guiding cap is assembled at the aforementioned mounting position. The connecting piece 124 may be a screw, a stud, or other threaded connecting pieces to connect with the sensing body 121. In a case that the connecting piece 124 passes through the first guiding hole of the guiding cap, the connecting piece 124 may move relative to the first guiding hole based on its clearance fit with the first guiding hole and is limited by the inner wall of the first guiding hole. Additionally, the elastic reset piece 125 may be a spring.

In the above embodiments, the movable body 122 may have at least two guiding pieces 123, and the distance sensing module 12 includes connecting pieces 124 that is in one-to-one correspondence to the at least two guiding pieces 123, so as to enhance the guidance reliability of the movement of the movable body 122 under force through the cooperation of plural guiding pieces 123 and connecting pieces 124. And/or, the distance sensing module 12 may include at least two elastic reset pieces 125 to improve the stability of the movable body 122 when not subjected to force and the stability and reliability of the reset force after the force is removed.

In some embodiments, the movable body 122 may be arranged at the top of the sensing body 121 in a lifting-and-lowering direction. Arranging the movable body 122 at the top of the sensing body 121 may prevent a direct collision between the sensing body 121 and external objects, avoiding the internal structural deformation or misalignment of the sensing body 121 due to external impacts, thereby enhancing the sensing accuracy of the sensing body 121. In a case that the movable body 122 is subjected to an external force, the first trigger structure 1221 on the movable body 122 may contact the protective switch 1222 on the sensing body 121, causing the distance sensing module 12 to be driven by the drive control module 13 to descend, ensuring the collision protection function of the entire device.

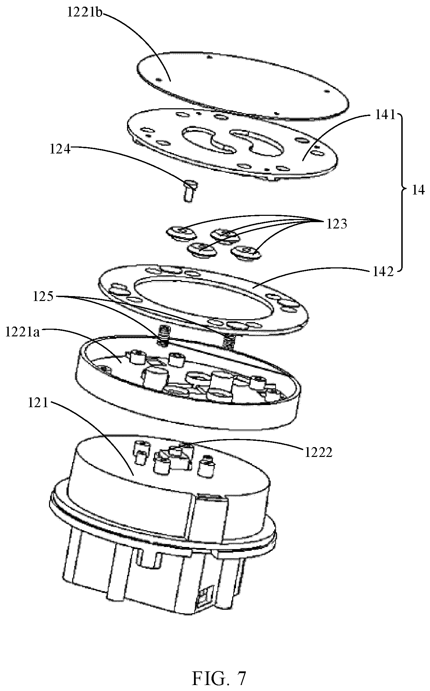

In some embodiments, as shown in FIGS. 5 to 7, the movable body 122 may include a housing 1221a, a cover 1221b, and a voice control module 14. The cover 1221b is assembled with the housing 1221a to form an accommodation cavity, and the voice control module 14 is assembled in the accommodation cavity. After the cover 1221b is assembled with the housing 1221a, the cover 1221b serves a decorative function to enhance the overall aesthetics of the cleaning device 2. Integrating the voice control module 14 into the movable body 122 may utilize the position of the voice control module 14, which is close to the exterior of the device body 21 when in the first operating state and protrudes from the device body 21 when in the second operating state, to ensure the reliability of transmission and reception of signal for the voice control module 14 and avoid interference to transmission and reception of signal from the device body 21. Additionally, the structure of the movable body 122 is effectively utilized to enhance the integration of the cleaning device 2 and reduce the cost of the cleaning device 2.

The voice control module 14 may include a voice control cover plate 141 and a voice control circuit board 142. The voice control circuit board 142 may be mounted on the housing 1221a, and the voice control cover plate 141 may be fixed to the housing 1221a.

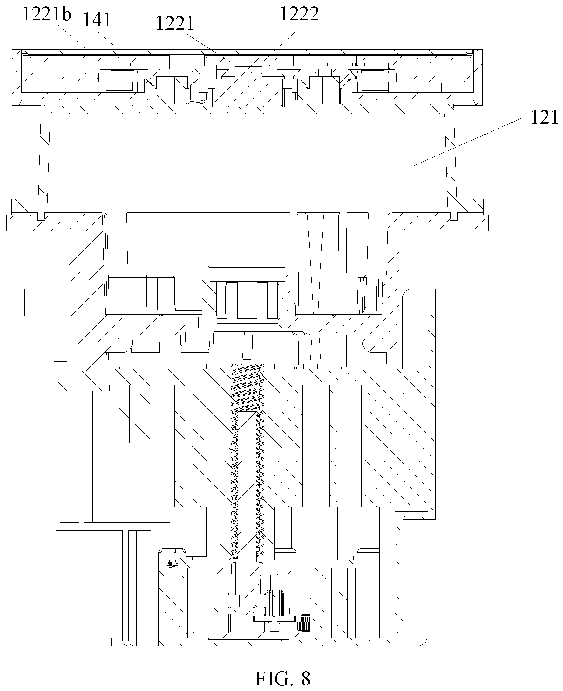

In the above embodiment, as shown in FIG.8, the first trigger structure 1221 is arranged at a side surface of the voice control cover plate 141 facing the sensing body 121, specifically at a center area of the voice control cover plate 141, and both of center areas of the voice control circuit board 142 and the housing 1221a have an opening to allow the first trigger structure 1221 to pass through the voice control circuit board 142 and the housing 1221a, so as to contact the protective switch 1222 on the sensing body 121.

Further, the first trigger structure 1221 and the central area of the voice control cover 141 may be integrated or separated. When the first trigger structure 1221 is integrated with the central area of the voice control cover 141, the thickness of the central area of the voice control cover 141 is greater than that of other areas of the voice control cover 141 as shown in FIG.8. When the first trigger structure 1221 is separated from the central area of the voice control cover plate 141, the first trigger structure 1221 may be additionally arranged on the central area of the voice control cover plate 141.

In some embodiments, the protective switch 1222 may be arranged at the top of the sensing body 121 in the lifting-and-lowering direction. In a case that the movable body 122 is located at the top of the sensing body 121, placing the protective switch 1222 at the top of the sensing body 121 facilitates the movable body 122 contacting with the protective switch 1222 during the movement of the movable body 122 under force.

In other embodiments, the protective switch 1222 may also be positioned at other locations on the sensing body 121, as long as the protective switch 1222 may be contacted by the movable body 122 after the movement of the movable body 122.

In some other embodiments, the first trigger structure 1221 may be the bottom surface of the movable body 122 or a protrusion on the bottom surface of the movable body 122 (e.g., the central area of the voice control cover plate 141 or an additional protrusion provided in the central area of the voice control cover plate 141), as long as the protective switch 1222 may be contacted by the first trigger structure 1221. The protective switch 1222 may be a micro-switch.

In some embodiments, as shown in FIGS. 5 to 7, the drive control module 13 may include a drive motor 131, a transmission screw 132, and an adapting member 133. The transmission screw 132 is connected to the output shaft of the drive motor 131. The adapting member 133 has a threaded transmission hole 1332, which is in transmission connection to the transmission screw 132. The sensing body 121 is fixedly assembled on the adapting member 133. The drive motor 131 drives the transmission screw 132 to rotate. The transmission screw 132 passes through a fixed pressing plate 1341 and fits with the adapting member 133. The transmission screw 132 has external threads, and the corresponding threaded transmission hole 1332 in the adapting member 133 has internal threads that mesh with the transmission screw 132. The drive motor 131 drives the transmission screw 132 and the adapting member 133, so that the rotation of the transmission screw 132 is converted into an axial movement of the adapting member 133. The sensing body 121 assembled on the adapting member 133 may move axially along with the adapting member 133.

In the above embodiments, the drive control module 13 may also include a guiding structure 134. The guiding structure 134 includes a fixed pressing plate 1341 and a guiding column 1342 arranged at the fixed pressing plate 1341 and passing through the fixed pressing plate 1341. The drive motor 131 is assembled with the fixed pressing plate 1341. The fixed pressing plate 1341 is fixedly connected to the sensing body 121. The adapting member 133 has a second guiding hole 1331, and the guiding column 1342 is slidably inserted into the second guiding hole 1331 to provide guidance for the adapting member 133 during the axial movement of the adapting member 133.

The threaded transmission hole 1332 may be arranged in the central area of the adapting member 133. The adapting member 133 includes a pair of second guiding holes 1331, which are symmetrically arranged at two sides of the threaded transmission hole 1332, to provide a symmetrical arrangement of the pair of second guiding holes 1331 to enhance the guidance stability.

The fixed pressing plate 1341 may have an assembly hole 1343 for limiting the drive motor 131 and an avoidance hole 1344 through which the transmission screw 132 passes. The drive motor 131 is limitedly mounted in the assembly hole 1343, and the transmission screw 132 passes through the avoidance hole 1344 to in transmission fit with the adapting member 133. The plate-like structure of the fixed pressing plate 1341 facilitates stable and reliable fixation with the sensing body 121. The fixed pressing plate 1341 may be made of plastic or metal.

Furthermore, the fixed pressing plate 1341 may attach the drive motor 131 to the mounting seat 135 through a screw. After the fixed pressing plate 1341 is assembled to the mounting seat 135, the fixed pressing plate 1341 may be fixedly connected to the sensing body 121 to achieve a stable mounting of the drive assembly.

In some embodiments, the lifting-and-lowering assembly 1 may also include a lifting-and-lowering detection module 15. The lifting-and-lowering detection module 15 includes a second trigger structure 152 and a lifting-and-lowering detection circuit board 151 that is electrically connected to the control main board. The second trigger structure 152 is assembled with the adapting member 133. The lifting-and-lowering detection circuit board 151 has an upper limit detection switch 1511 and a lower limit detection switch 1512 arranged in a height direction of the device body 21. In a case that the distance sensing module 12 reaches its lower limit position, the second trigger structure 152 cooperates with the lower limit detection switch 1512, and in a case that the distance sensing module 12 reaches its upper limit position, the second trigger structure 152 cooperates with the upper limit detection switch 1511. Through the upper limit detection switch 1511 and the lower limit detection switch 1512, the positions of the adapting member 133 and the distance sensing module 12 assembled with the adapting member 133 may be monitored, so that the distance sensing module 12 stops moving after reaching the first operating state and second operating state.

The upper limit detection switch 1511 and the lower limit detection switch 1512 each may be an optocoupler switch, or may be a mechanical switch, or a Hall effect switch, etc. The second trigger structure 152 may correspondingly be a light-blocking body, a magnet, etc. As shown in FIG. 6, the upper limit detection switch 1511 and the lower limit detection switch 1512 each are an optocoupler switch, and the second trigger structure 152 is a light-blocking piece, and the second trigger structure 152 may block the light of the optocoupler switch in a case that the second trigger structure 152 moves to its limit positions along with the adapting member 133.

In some embodiments, the sensing body 121 includes a base, a mounting shield, and a laser radar body. The mounting shield is assembled with the base to form a mounting cavity, and the laser radar body is assembled within the mounting cavity. Using laser radar for distance measurement may enhance the accuracy of the distance detection and the map construction of the cleaning device 2. The mounting cavity formed by the base and the mounting shield may protect the laser radar body. The base may be fixed to the adapting member 133 through a screw, and the mounting shield may be fixed to the base with a screw.

The present invention further provides a cleaning device 2. The dashed line with arrows in FIGS. 1 and 2 may represent the thickness direction of the device body 21 and the lifting-and-lowering direction. The cleaning device 2 includes a device body 21 and the above-mentioned lifting-and-lowering assembly 1. The device body 21 has a receiving cavity, and the lifting-and-lowering assembly 1 is assembled in the receiving cavity. The distance sensing module 12 has a first operating state where the distance sensing module 12 is accommodated in the receiving cavity and a second operating state where the distance sensing module 12 protrudes from the top of the device body 21 in the lifting-and-lowering direction.

In a case that the lifting-and-lowering assembly 1 is assembled in the cleaning device, the distance sensing module 12 of the lifting-and-lowering assembly 1 may switch between the first operating state where the distance sensing module 12 is received in the receiving cavity of the device body 21 and the second operating state where the distance sensing module 12 protrudes from the device body 21, so that the distance sensing module 12 is controlled to descend in a case that the distance sensing module 12 is subjected to external collisions or in a case that the drive control module 13 receives a lowering command, facilitating the cleaning device entering into low-clearance areas; and in a case that the drive control module 13 receives a lifting command, the distance sensing module 12 may protrude from the device body to reach a height required for a distance measurement function. The above structural arrangement helps reduce the thickness of the cleaning device 2 and enrich its working scenarios.

In some embodiments, the cleaning device 2 may integrate the above-mentioned collision protection function and a lifting-and-lowering position detection function, which helps prolong the service life of the sensing body 121 with lifting-and-lowering capabilities and prevent damage from accidental collisions. For example, in a case that the cleaning device 2 enters a low-clearance area where the movable body 122 is subjected to an external force, the movable body 122 may contact the protective switch 1222 based on the displacement movement of the movable body 122 movably connected with the sensing body 121 within a preset range. The protective switch 1222 transmits the collision signal to the control main board, so that the control main board then controls the drive motor 131 to rotate and drive the distance sensing module 12 to descend to the first operating state inside the cleaning device 2, and once the distance sensing module 12 is in place, the second trigger structure 152 aligns and cooperates with the lower limit detection switch 1512 to send a signal to the control main board to stop the rotation of the drive motor 131.

In the first operating state, the top of the cleaning device 2 may be generally flat, resulting in a neat and aesthetically pleasing structure.

In other embodiments, the control main board may directly send a user control command to the drive motor 131, and the drive motor 131 rotates and drives the distance sensing module 12 to descend to the first operating state inside the cleaning device 2, and once the distance sensing module 12 is in place, the second trigger structure 152 aligns and cooperates with the lower limit detection switch 1512 to send a signal to the control main board to stop the rotation of the drive motor 131.

In a case that the control main board needs to perform distance measurement to generate a map or use the sensing body 121, the control main board controls the drive motor 131 to rotate and drive the distance sensing module 12 to rise to the second operating state outside the cleaning device 2, and once the distance sensing module 12 is in place, the second trigger structure 152 aligns and cooperates with the upper limit detection switch 1511 to send a signal to the control main board to stop the rotation of the drive motor 131.

The height by which the sensing body 121 of the distance sensing module 12 protrudes from the top of the device body 21 in the second operating state may be set according to specific requirements, which will not be limited by the present invention. For example, the height by which the sensing body 121 of the distance sensing module 12 protrudes from the top of the device body 21 in the second operating state may be 4 mm to 8 mm. Further, the height by which the sensing body 121 of the distance sensing module 12 protrudes from the top of the device body in the second operating state may be 6 mm.

It should be noted that the cleaning device 2 mentioned above may be a floor sweeper, a bed sweeper, a glass cleaner, etc., which will not be limited by the present invention.

## Claims

1. A lifting-and-lowering assembly, applied to a cleaning device and comprising:
a mounting seat (135);
a distance-sensing module (12) liftably and lowerably arranged at the mounting seat (135), wherein the distance-sensing module (12) comprises a sensing body (121) and a movable body (122) movably connected to the sensing body (121), the movable body (122) has a first trigger structure (1221), and the sensing body (121) has a protective switch (1222) located in a movement path of the first trigger structure (1221); and
a drive control module (13) assembled with the mounting seat (135), comprising a control main board, a drive motor (131) and an adapting member (133) in transmission connection with the drive motor (131), wherein the sensing body (121) is arranged on the adapting member (133), and the drive motor (131) and the protective switch (1222) are each electrically connected to the control main board to drive the distance-sensing module (12) to lift and lower.

2. The lifting-and-lowering assembly according to claim 1, wherein the distance-sensing module (12) comprises an elastic reset piece (125) and a connecting piece (124) connected to the sensing body (121); the movable body (122) comprises a guiding piece (123) having a first guiding hole, and the connecting piece (124) passes through the first guiding hole and is in clearance fit with the first guiding hole; and the elastic reset piece (125) abuts with both the movable body (122) and the sensing body (121).

3. The lifting-and-lowering assembly according to claim 2, wherein the movable body (122) has at least two guiding pieces (123), and the distance-sensing module (12) comprises connecting pieces (124) in one-to-one correspondence and fit with the guiding pieces (123); and/or
the distance-sensing module (12) comprises at least two elastic reset pieces (125).

4. The lifting-and-lowering assembly according to claim 1, wherein the movable body (122) is arranged at a top of the sensing body (121) in a lifting-and-lowering direction.

5. The lifting-and-lowering assembly according to claim 1, wherein the movable body (122) comprises a housing (1221a), a cover (1221b), and a voice control module (14), the cover (1221b) is assembled to the housing (1221a) to enclose an accommodation cavity, and the voice control module (14) is assembled in the accommodation cavity.

6. The lifting-and-lowering assembly according to claim 1, wherein the protective switch (1222) is arranged at a top of the sensing body (121) in a lifting-and-lowering direction.

7. The lifting-and-lowering assembly according to claim 1, wherein the adapting member (133) has a threaded transmission hole (1332), the drive control module (13) comprises a transmission screw (132), and the transmission screw (132) is connected with an output shaft of the drive motor (131) and is in transmission connection with the threaded transmission hole (1332).

8. The lifting-and-lowering assembly according to claim 7, wherein the drive control module (13) further comprises a guiding structure (134); the guiding structure (134) comprises a fixed pressing plate (1341) and a guiding column (1342) arranged to the fixed pressing plate (1341); the drive motor (131) is assembled and fitted with the fixed pressing plate (1341), and the fixed pressing plate (1341) is fixedly connected to the sensing body (121); the adapting member (133) has a second guiding hole (1331), and the guiding column (1342) is movably inserted into the second guiding hole (1331).

9. The lifting-and-lowering assembly according to claim 8, wherein the threaded transmission hole (1332) is arranged in a central area of the adapting member (133), and the adapting member (133) comprises a pair of second guiding holes (1331) symmetrically arranged at two sides of the threaded transmission hole (1332).

10. The lifting-and-lowering assembly according to claim 7, further comprising a lifting-and-lowering detection module (15), wherein the lifting-and-lowering detection module (15) comprises a second trigger structure (152) and a circuit board (151) electrically connected to the control main board; and
wherein the second trigger structure (152) is assembled with the adapting member (133), and the circuit board (151) has an upper limit detection switch (1511) and a lower limit detection switch (1512) arranged in a height direction of the device body (21); in a case that the distance-sensing module (12) reaches a lower limit position, the second trigger structure (152) cooperates with the lower limit detection switch (1512); and in a case that the distance-sensing module (12) reaches an upper limit position, the second trigger structure (152) cooperates with the upper limit detection switch (1511).

11. The lifting-and-lowering assembly according to claim 10, wherein the upper limit detection switch (1511) and the lower limit detection switch (1512) each comprise an optocoupler switch, and the second trigger structure (152) comprises a light-blocking piece.

12. The lifting-and-lowering assembly according to claim 1, wherein the sensing body (121) comprises a base, a mounting shield, and a laser radar body, the mounting shield is assembled with the base to enclose a mounting cavity, and the laser radar body is assembled in the mounting cavity.

13. The lifting-and-lowering assembly according to claim 1, wherein the first trigger structure (1221) comprises a protruding structure arranged on a side surface of the movable body (122) facing the sensing body (121).

14. A cleaning device, comprising a device body (21) and the lifting-and-lowering assembly according to any one of claims 1 to 13, wherein the device body (21) has a receiving cavity, and the lifting-and-lowering assembly is assembled in the receiving cavity; and the distance-sensing module (12) has a first operating state where the distance-sensing module (12) is received in the receiving cavity and a second operating state where the distance-sensing module (12) protrudes above a top of the device body (21) in a lifting-and-lowering direction.
